# EUROPEAN PATENT APPLICATION

(11) **EP 1 013 615 A2**
(43) Date of publication of application: **28.06.2000**
(21) Application number: 99500239.1
(22) Date of filing: 13.12.1999
(51) Int. Cl.: C02F 11/12, C02F 11/18

(54) **Procedure for obtaining a pulverulent product from the reject fraction of a water potabilization plant, the product obtained through such a procedure and the use of that product**

(30) Priority: 22.12.1998 ES 9802661
(71) Applicant: Sociedad General de Aguas de Barcelona, S.A., 08009 Barcelona (ES)
(72) Inventor: Cusido Fabregas, Joan Antoni, 08028 Barcelona (ES)
(74) Representative: SUGRANES - VERDONCES - FERREGÜELA

(57) **Abstract**

The procedure comprises the following stages: capturing and decanting, filtering, sifting and/or centrifugaly separating the reject waste from a potabilization plant; flocculating the said reject waste with aluminum salts and sedimenting the floccules formed, obtaining a fraction of turbulent water and a first reject fraction; pumping the first rejection fraction; dewatering this latter, preferably in a centrifugal separator, to obtain a second reject fraction; stirring the second reject fraction in a preparatory reservoir, with the addition of a de-flocculant agent for the formation of a barbotine slurry; and drying the barbotine slurry with hot air or inert gas for the obtention of a pulverulent product of a particle size of between 50 and 400 microns, by spraying or atomizing in an atomizer at a temperature of between 100°C and 500°C.

The product thus obtained can be used as a component in the manufacture of structural ceramic products or coatings and/or as coloring.

## Description

### Technical Field of the Invention.-

The present invention relates to a procedure for obtaining a pulverulent product from the reject waste product of a water potabilization plant. The currently known installation for treating reject waste products comprises the stages of:
- capturing the reject waste from at least one emission point;
- storing the reject waste through stirring;
- flocculating the reject waste with aluminum salts and sedimenting the floccules formed; obtaining a fraction of slight turbulence, capable of being returned to the river bed or reused, and a first reject fraction;
- pumping the first reject fraction; and
- dewatering the pumped, first reject fraction to obtain a second, thickened, reject fraction.

The present invention also relates to the pulverulent product obtained through the procedure and the use of that product in the ceramic industry.

### State of the Art.-

The obtaining of water potable for human consumption from natural water sources (rivers, reservoirs, canals, etc.) requires the conjuncture of complex processes that are performed in potabilization plants, which generate on the one hand water potable for human consumption (95 - 97%) and on the other, waste or paste by-products (3 - 5%). This ratio, expressed in absolute terms, represents large quantities of waste products.

The composition and content of reject waste products from water potabilization plants are a function of the flow of water to be purified and the treatment procedure that generates them. The problem of their generation and placement is much greater, the greater the treatment capacity of the plant generating them, and the more turbulent the water to be treated. This currently constitutes a problem of growing importance.

It is well known that the principal components of these reject waste products are metallic hydroxides (aluminum and iron), lime, some pollutants that come from the watershed spill, and organic material, this last in small proportion compared to the sludge from sewage plants. The potabilization plant reject waste has quite a fine particle size, a heavy metal content similar to the clays used by the ceramic industry, a high plasticity and is a poor candidate for incineration.

The currently known treatment procedures for reject waste generally comprise the stages of:
- capturing the reject waste from at least one emission point;
- storing the reject waste through stirring;
- flocculating the reject waste with aluminum salts and sedimenting the floccules formed; obtaining a fraction of slight turbulence, capable of being returned to the river bed or reused, and a first reject fraction;
- pumping the first reject fraction; and
- dewatering the pumped, first reject fraction to obtain a second, thickened, reject fraction.

As regards the disposal alternatives of the second or last reject fraction generated in water potabilization plants, at the current time different techniques are applied: recovery, conditioning, dewatering and placement in a controlled dumps; spilling into an industrial or urban sewage plants cesspool network; direct incorporation onto agricultural lands as an improvement agent; placement in sanitary fills; and direct discharge into surface waters or by surface storage or in deep lakes. This last is the most commonly employed option at the current time. As regards to valorization, that is the use of the reject by-products of potabilization plants as raw materials in another different process, its application at the present time is practically non-existent in a practical sense.

However, in every case where potabilization plant reject products, considered inert, are in certain cases the cause of pollution, and given that current environmental law increasingly prohibits their disposal in dumps, it has become a priority need to find valorization systems for these by-products other than their mere disposal in dumps.

Since, in general, the percentage of metals present in potabilization plant reject products are similar to those of construction clays, there have been attempts to value them as a product for the ceramic industry, generally by their direct application to clays. However, contrary to that which occurs with sewage plant sludge, these attempts have not been very successful and the results not very conclusive. No procedure is currently known that is industrially viable.

The object of the present invention is to provide a new and efficient valorization procedure for water potabilization plant reject by-products, the obtention from this procedure of a pulverulent product capable of being used as a component in the manufacture of structural ceramic products, of coatings or colorings and the use of this pulverulent product in the said industry.

### Explanation of the invention.-

To that end, the procedure of the present invention, of a new concept, is essentially characterized in that, after the dewatering stage, it comprises the additional stages of
- stirring the second, thickened, reject fraction in a preparatory reservoir, with the addition of a de-flocculant agent for the formation of a barbotine slurry; and
- drying the barbotine slurry with hot air or inert gas for the obtention of the pulverulkent product.

According to another characteristic of the procedure of the present invention, before the flocculating stage, the intermediate step of sifting the reject waste is carried out contingently, with the object of eliminating therefrom vegetable remains and other impurities sensitive to the sieve, and, after sifting, the reject waste undergoes a centrifugal separation process.

Preferably, the sifting is carried out through a mesh of 1 mm maximum.

From the centrifugal separation process, a barbotine slurry is obtained with a humidity of preferably between 45% and 70%.

In accordance with another characteristic of the present invention, the stage of drying the barbotine slurry with hot air or inert gas, is carried out by spraying or atomization of this last, until a homogenous product of fine grain size is obtained, that is, having a particle size of between 50 and 400 microns.

According to one preferred form of embodiment, the said spraying or atomization is carried out in an atomizer at a temperature of between 100°C and 500°C.

A second object of the present invention is the pulverulent product obtained through the described procedure.

A third object of the present invention is the use of the previous pulverulent product as a component in the manufacture of structural ceramic products or coatings and/or as coloring.

### Brief description of the drawings.-

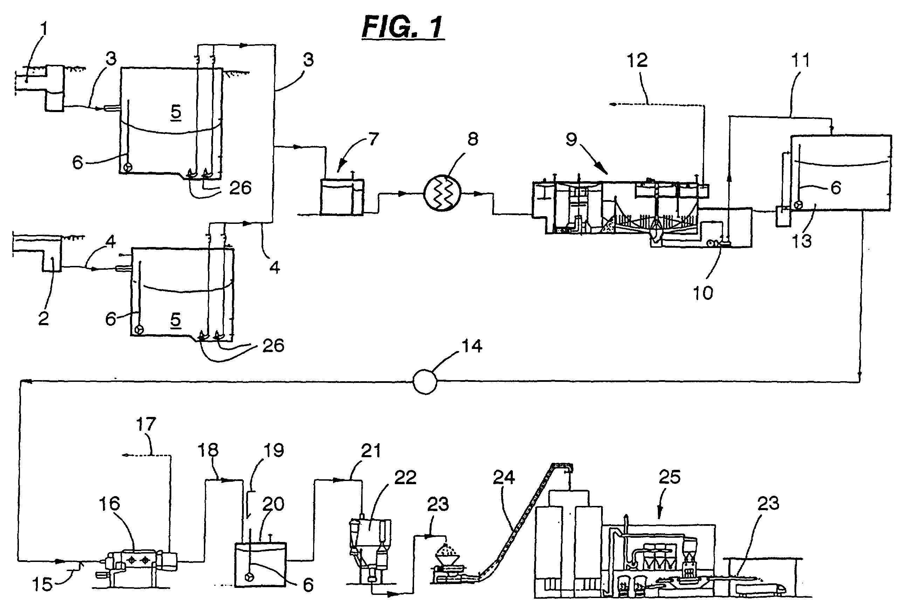

There follows a detailed description of the preferred, although not exclusive form of the procedure, object of the present invention, for the better understanding of which, drawings are included, attached merely for the purpose of non-limiting example, of which the only figure is a schematic block diagram of the working principle of the invention procedure.

### Detailed description of the drawings.-

The said figure shows a treatment station for reject waste products 3, 4 of a water potabilization plant based on the procedure of the present invention. The final product of the said procedure is a pulverulent product 23 that is employed as an additive in the manufacture of material for the ceramic industry, either structural, as a coating, or as a coloring.

The reject waste 3 of the settlers 1 and the reject waste 4 of the filters 2, after storage in the corresponding accumulation reservoirs 5, is extracted through each pumping group 26.

Downstream of the distribution works 7, the reject waste 3, 4 is made to pass through a sieve 8, that eliminates the vegetable remains and other impurities sensitive to the sieve 8. Preferably the sieve 8 mesh is of a maximum size of 1 mm. Alternatively the sieve 8 can be incorporated into the same distribution works 7.

Downstream of the sieve 8, the sifted water flows into a mixing, flocculation and thickening chamber 9 that, being of a type well known in the art, provides a water fraction of slight turbulence 12, capable of being spilled into the river bed or reused, and a first reject fraction 11.

This first reject fraction 11 is pumped through pumps 10 to a storage reservoir 13, from where it is pumped through a pumping group 14 to a centrifugal separator 16 in which, through the addition of a flocculant agent 15, it is dewatered mechanically, through centrifugation, which allows the obtention of a barbotine slurry 18 with a humidity of between 45% and 70% and a new water fraction 17, that can be returned, for example, to the storage reservoir 13.

It should be understood that within the scope of the present invention the alternative possibility is included of performing the said deeatering by thermal rather than mechanical means.

The barbotine slurry 18 is caused to flow into a preparation reservoir 20, to which de-flocculant agent 19 is added, where this is necessary for the later atomization process.

The prepared barbotine slurry 21 is fed into an atomizer device 22 that dries it and converts it into a pulverulent product 23 object of the present invention, that is a homogenous product of fine grain size, with a particle size comprised of between 50 and 400 microns.

The atomizer 22 is of a known type in the art, of a common type currently employed in the tile industry, whether of direct or indirect heat type, centrifugal or nozzle atomization, although its employment according to the invention is totally new.

Lastly, this pulverulent product 23 is fed via a conveying device 24 into a packaging, storage and shipment section 25.

It can be seen in the drawings that reservoirs 5, 13 and 20 are each conventionally stirred using a stirrer 6.

The nature of the present invention being sufficiently described, as well as the method of execution, it is hereby stated that inasmuch as the fundamental principle is not altered, changed or modified, it may undergo variations of detail, it being the principle, and that for which a patent of invention is applied for, for twenty years, that which is summarized in the following claims.

## Claims

1. A procedure for obtaining a pulverulent product (23) from the reject waste product (3, 4) of a water potabilization plant, comprising the stages of:
- capturing the reject waste (3, 4) from at least one emission point (1, 2);
- storing the reject waste through stirring;
- flocculating the reject waste (3, 4) with aluminum salts and sedimenting the floccules formed, obtaining a fraction of slight turbulence (12), capable of being returned to the river bed or reused, and a first reject fraction (11);
- pumping the first reject fraction (11); and
- dewatering the pumped, first reject fraction to obtain a second, thickened, reject fraction (18), characterized in that, after the dewatering stage, it comprises the additional stages of:
- stirring the second, thickened, reject fraction (18) in a preparatory reservoir (2), with the addition of a de-flocculant agent (19) for the formation of a barbotine slurry (21); and
- drying the barbotine slurry (21) with hot air or inert gas for the obtention of the pulverulent product (23).

2. Procedure according to claim 1, characterized in that, before the flocculating stage, the intermediate step of sifting the reject waste (3, 4) is carried out contingently, with the object of eliminating therefrom vegetable remains and other impurities sensitive to the sieve (8), and in that, after sifting, the reject waste undergoes a centrifugal separation process.

3. Procedure according to claim 2, characterized in that the sifting is carried out through a mesh of 1 mm maximum.

4. Procedure according to claim 1, characterized in that, from the centrifugal separation process, a barbotine slurry is obtained with a humidity of preferably between 45% and 70%.

5. Procedure according to claim 1, characterized in that the stage of drying the barbotine slurry (21) with hot air or inert gas, is carried out by spraying or atomization of this last, until a homogenous product of fine grain size is obtained, that is, having a particle size of between 50 and 400 microns.

6. Procedure according to claim 5, characterized in that the said spraying or atomization of the barbotine (21) is carried out in an atomizer (22) at a temperature of between 100°C and 500°C.

7. A pulverulent product (23) obtained through the procedure according to preceding claims.

8. The use of the pulverulent product (23) according to claim 7, as a component in the manufacture of structural ceramic products or coatings and/or as coloring.
